# DEMANDE DE BREVET EUROPEEN

(11) **EP 4 806 535 A1**
(43) Date de publication de la demande: **16.09.2026**
(21) Numéro de dépôt: 26161105.7
(22) Date de dépôt: 26.02.2026
(51) Int. Cl.: B01D 53/00, B01D 53/26

(54) **PROCÉDÉ ET APPAREIL DE REFROIDISSEMENT ET DE COMPRESSION D'UN FLUX CONTENANT DU CO2 ET DE L'EAU**

(30) Priorité: 10.03.2025 FR 2502360
(71) Demandeur: L'Air Liquide, Société Anonyme pour l'Etude et l'Exploitation des Procédés Georges Claude, 75007 Paris (FR)
(72) Inventeur: LECLERC, Mathieu, 75007 PARIS (FR); ROZIERES, Maxime, 75007 PARIS (FR); CALORO, Gian Luigi, 75007 PARIS (FR); BIGNAUD, Charles, 75007 PARIS (FR)
(74) Mandataire: Air Liquide

(57) **Abrégé**

Dans un procédé de refroidissement, compression et refroidissement d'un gaz contenant au moins 15% mol CO2 sont réalisées les étapes suivantes: mise en contact direct (T) du gaz (1) qui se refroidit avec de l'eau (5) qui se réchauffe formant de l'eau réchauffée (11), refroidissement de l'eau réchauffée pompée pour générer l'eau dans un système de refroidissement, le système de refroidissement comprenant :un échangeur de chaleur à contact indirect (HX 1) qui échange de la chaleur entre l'eau réchauffée pompée et un débit d'eau de refroidissement (17) du système d'eau de refroidissement et une tour de refroidissement (CT) par contact direct avec de l'air pour refroidir au moins une partie de l'eau de refroidissement en amont de l'échangeur de chaleur, avec usage de condensats (9) d'un compresseur du gaz refroidi par la mise en contact comme appoint d'eau pour le système de refroidissement.

## Description

La présente invention est relative à un procédé et à un appareil de refroidissement et de compression d'un flux contenant du CO2 et de l'eau. Le flux contient de préférence au moins 15% mol, de préférence au moins 30% mol de CO2 à base sèche ainsi que de l'eau et au moins une impureté telle qu'au moins un NOx et/ou au moins un SOx. Les unités de capture et purification du CO2 à partir de sources humides et chaudes (fumées par exemple) comprennent le plus souvent une étape de refroidissement par contact direct avec de l'eau. Cette étape permet aussi la séparation d'une partie significative de l'eau contenue dans la source. Elle est combinée à au moins une étape de compression et de refroidissement lorsque le procédé de séparation du CO2 requiert une hausse de pression permettant l'élimination d'une partie de l'eau restante. Une étape de séchage par adsorption par exemple peut être employée pour l'élimination de l'eau restante.

Il est classique de procéder au refroidissement en mettant en contact de l'eau avec la source chaude, l'eau obtenue en cuve du contacteur étant pompée et refroidie contre une source froide avant d'être réinjectée dans le contacteur. Cette eau obtenue en cuve est typiquement chargée en poussières et en impuretés qui ont été lavées. C'est en particulier le cas lorsque la source chaude est une fumée de combustion ou une fumée issue d'une unité de production de ciment ou de chaux. Il est alors nécessaire de purger une partie de l'eau obtenue afin de limiter la concentration en poussières et impuretés qui pourraient amener à des problèmes d'encrassement ou de dépôt dans la boucle de recirculation de l'eau. Dans le cas d'une source chaude très concentrée en eau, la condensation de l'eau peut être suffisante pour faire l'appoint compensant cette purge. Dans le cas d'une source chaude relativement peu chargée en eau, un appoint d'eau extérieur est alors nécessaire. La source froide est typiquement de l'eau de refroidissement générée par des refroidisseurs indirects à air ou par des tours de refroidissement à contact direct avec de l'air ou peut être de l'eau de mer. Dans cette configuration, un échangeur de chaleur eau / eau est alors utilisé. Dans certains cas, l'eau obtenue en cuve est refroidie directement par des refroidisseurs indirects à air. L'eau issue de la condensation de la vapeur contenue dans les gaz contenant le CO2 à purifier est purgée vers une station de traitement avant réutilisation ou rejet dans le milieu naturel. Il est connu de FR3128384 d'utiliser un procédé de lavage d'un flux gazeux dans lequel : un flux gazeux comprenant au moins un NOx et/ou au moins un SOx et/ou de la matière en suspension et au moins 15% mol de CO2 à base sèche est envoyé à une tour de lavage dans lequel il est refroidi et lavé au moyen d'eau et/ou d'un liquide alcalin pour produire un gaz enrichi en CO2 en tête de la tour et un liquide de cuve enrichi en l'au moins un NOx et/ou l'au moins un SOx et/ou des matières en suspension en cuve de la tour.

US7993615 décrit une tour de mise en contact dont l'eau d'appoint provient d'une source non identifiée.

US2013/0098104 utilise deux tours en série qui remplissent le rôle de la tour de mise en contact du gaz à refroidir avec de l'eau mais ne décrit pas de tour de refroidissement à l'air pour refroidir l'eau. Le document n'indique pas comment sont dissipées les calories transférées des fumées à l'eau.

### PROBLÈME RÉSOLU PAR L'INVENTION

Dans le cas d'une compression et d'un séchage après l'étape de refroidissement, il est important de minimiser la température de la source froide afin de limiter la température en entrée du compresseur et afin de condenser un maximum d'eau avant celui-ci. Cela permet de limiter la taille du compresseur et l'énergie nécessaire à la compression et au séchage.

Or les refroidisseurs indirects à air sont relativement inefficaces quand il s'agit de refroidir le plus possible car ils impliquent une différence relativement élevée entre la température de bulbe sec de l'air et celle du fluide refroidi (typiquement 10°C). Les tours de refroidissement à contact direct avec de l'air permettent une approche avec la température de bulbe humide (bien plus basse que la température de bulbe sec) mais nécessite un appoint important d'eau car une part significative de l'eau est évaporée lors de l'échange thermique. Cette quantité d'eau n'est typiquement pas disponible même dans les fumées relativement humides.

L'utilisation d'un échangeur eau / eau augmente aussi la différence de température entre l'air (bulbe humide ou sec) et les fumées refroidies.

Aussi, en évaporant une partie de l'eau, l'invention permet de réduire le débit d'eau qui est envoyé à la station de traitement, ce qui permet d'en réduire ses dimensions et son coût.

L'eau circulant à travers une tour de refroidissement à l'air contient des impuretés qui pourraient être émises à l'air (du fait du contact direct) sous forme d'aérosols par exemple. Selon l'invention, une boucle dédiée permet de réguler la composition de l'eau par le biais de la qualité de l'appoint qui provient du système de traitement des condensats. Ainsi, les quantités d'impuretés envoyées à l'air sont extrêmement faibles.

### DESCRIPTION DE L'INVENTION

L'invention consiste à minimiser l'évaporation et augmenter l'appoint en eau du système afin d'assurer le fonctionnement d'une tour de refroidissement à contact direct.

Selon un objet de l'invention il est prévu un procédé de refroidissement, compression et refroidissement d'un gaz contenant au moins 15% mol CO2 et de l'eau comprenant les étapes suivantes:
- mise en contact direct du gaz qui se refroidit avec de l'eau, à une première température, plus froide que le gaz, qui se réchauffe formant de l'eau réchauffée
- pompage de l'eau réchauffée
- refroidissement de l'eau réchauffée pompée pour générer l'eau à la première température dans un système de refroidissement, le système de refroidissement comprenant :
   ∘ un échangeur de chaleur à contact indirect qui échange de la chaleur entre l'eau réchauffée pompée et un débit d'eau de refroidissement du système d'eau de refroidissement et une tour de refroidissement par contact direct avec de l'air pour refroidir au moins une partie de l'eau de refroidissement en amont de l'échangeur de chaleur, l'eau refroidie dans la tour de refroidissement étant renvoyée à l'échangeur de chaleur
- compression du gaz refroidi par la mise en contact dans un compresseur pour produire un fluide comprimé contenant du CO2 et de l'eau
- refroidissement du gaz comprimé et condensation partielle de l'eau qu'il contient formant de l'eau condensée et un débit de gaz appauvri en eau et
- utilisation d'au moins une partie de l'eau condensée comme appoint d'eau pour le système de refroidissement, éventuellement après traitement dans une unité de traitement pour épurer l'eau condensée.

Un objectif de l'invention est de générer de l'eau à partir du procédé de capture de CO2 avec une qualité suffisante pour pouvoir l'utiliser dans une tour de refroidissement. Cette idée présente l'avantage de ne pas extraire de l'eau du milieu naturel. Dans un appareil de capture de CO2, souvent on génère de l'eau liquide à trois endroits : dans la tour de mise en contact direct entre le gaz à traiter et l'eau, puis dans le compresseur et dans le sécheur en aval de la tour. Ces trois condensats sont envoyés à une station de traitement d'eau afin d'être purifiés. Cependant la majorité de l'eau vient de la tour de mise contact direct (plus de 50%). Cette eau sert de liquide d'appoint dans une boucle de refroidissement semi-ouverte à l'eau.

Selon l'invention, l'appoint en eau du circuit de refroidissement vient de la partie chaude d'une unité de séparation de CO2 permettant de réduire, voire d'éviter une consommation d'eau venant des sources locales qui est interdite dans de nombreux pays à pénurie d'eau.

Selon d'autres caractéristiques facultatives :
- on refroidit le débit d'eau de refroidissement, réchauffé dans l'échangeur de chaleur en amont de la tour de refroidissement à l'air ou à réchauffer dans l'échangeur de chaleur en aval de la tour de refroidissement, dans un moyen de refroidissement.
- le moyen de refroidissement est un aéro-refroidisseur qui refroidit l'eau par contact direct avec de l'air
- le moyen de refroidissement est un autre échangeur de chaleur à contact indirect qui reçoit des frigories d'un autre circuit de refroidissement
- l'autre circuit de refroidissement est un circuit de refroidissement du compresseur
- le procédé comprend les étapes de séchage du débit de fluide appauvri en eau par adsorption et condensation de la vapeur d'eau adsorbée
- au moins une partie de l'au moins une partie de l'eau condensée est traitée pour réduire son acidité avant d'être envoyée au système de refroidissement
- au moins une partie de l'au moins une partie de l'eau condensée n'est pas traitée avant d'être envoyée au système de refroidissement
- on forme un débit d'appoint d'eau en mélangeant de l'eau traitée dans l'unité de traitement et au moins un condensat non traitée dans l'unité de traitement et éventuellement un débit de purge non traité dans l'unité de traitement pour réguler le niveau d'acidité du débit d'appoint
- une partie de l'eau de refroidissement circule dans le circuit de refroidissement sans passer par la tour de refroidissement à l'air
- on régule la quantité d'eau circulant dans le circuit de refroidissement sans passer par la tour de refroidissement à l'air en fonction du débit d'appoint.

Selon un autre objet de l'invention, il est prévu un appareil de refroidissement, compression et refroidissement d'un gaz contenant au moins 15% mol CO2 et de l'eau comprenant :
- des moyens de mise en contact direct du gaz qui se refroidit avec de l'eau, à une première température, plus froide que le gaz, qui se réchauffe formant de l'eau réchauffée
- une pompe reliée pour pressuriser l'eau réchauffée produisant de l'eau réchauffée pompée
- un système de refroidissement de l'eau réchauffée pour générer l'eau à la première température, le système de refroidissement comprenant :
   ∘ un échangeur de chaleur à contact indirect qui échange de la chaleur entre l'eau réchauffée pompée et un débit d'eau de refroidissement du système d'eau de refroidissement et une tour de refroidissement par contact direct avec l'air pour refroidir au moins une partie de l'eau de refroidissement en amont de l'échangeur de chaleur, la tour étant reliée à l'échangeur de chaleur pour y renvoyer de l'eau refroidie dans la tour
- des moyens de compression du gaz refroidi dans les moyens de mise en contact pour produire un fluide comprimé contenant du CO2 et de l'eau
- un refroidisseur pour refroidir et condenser partiellement un gaz comprimé par les moyens de compression et un séparateur de phase pour séparer le gaz condensé partiellement formant de l'eau condensée et un débit de gaz appauvri en eau et
- une conduite reliée au séparateur de phases pour envoyer au moins une partie de l'eau condensée comme appoint d'eau pour le système de refroidissement, éventuellement reliée à une unité de traitement pour épurer l'eau.

Selon d'autres caractéristiques facultatives :
- un moyen de refroidissement est connecté pour refroidir le débit d'eau de refroidissement, réchauffé dans l'échangeur de chaleur en amont de la tour de refroidissement ou à réchauffer dans l'échangeur de chaleur en aval de la tour de refroidissement, dans un moyen de refroidissement
- le moyen de refroidissement est un aéro-refroidisseur qui refroidit l'eau par contact direct avec de l'air
- le moyen de refroidissement ou un autre échangeur de chaleur à contact indirect qui reçoit des frigories d'un autre circuit de refroidissement,
- l'autre circuit de refroidissement éventuellement qui est un circuit de refroidissement des moyens de compression
- le cycle de refroidissement est un cycle semi ouvert
- le système de refroidissement est le seul moyen de refroidissement de l'eau réchauffée
- toute l'eau réchauffée et refroidie est renvoyée aux moyens de mise en contact
- l'appareil comprend une station de traitement commune aux condensats de la compression du gaz provenant des moyens de mise en contact et du système de refroidissement
- l'appareil comprend une station de traitement commune aux condensats de la compression du gaz provenant des moyens de mise en contact, du système de refroidissement et du circuit de renvoi d'eau réchauffée refroidi par le système de refroidissement
- le système de refroidissement comprenant l'échangeur de chaleur à contact indirect qui échange de la chaleur entre l'eau réchauffée pompée et le débit d'eau de refroidissement du système d'eau de refroidissement et la tour de refroidissement par contact direct forme une boucle semi ouvert

Selon un objet de l'invention il est prévu un procédé de séparation d'un flux contenant du CO2 et de l'eau comprenant un procédé de refroidissement et de compression tel que décrit en dessus, le gaz comprimé dans le compresseur étant ensuite épuré pour enlever de l'eau, refroidi et séparé par condensation partielle et/ou distillation et/ou solidification pour produire un débit riche en CO2 contenant par exemple au moins 90% mol CO2. Eventuellement le flux séché est séparé par adsorption à bascule de pression pour enrichir le flux en CO2 en amont de la séparation par condensation partielle et/ou distillation et/ou solidification.

Une partie du refroidissement indirect peut être par le biais de refroidisseurs indirects à air ou d'échangeurs à eau de refroidissement (optionnellement à eau de mer). Ce refroidissement indirect peut être éliminé si l'évaporation dans la tour de refroidissement à contact direct avec l'air est inférieure à l'appoint en eau du système (en particulier si un appoint extérieur est considéré).

Les condensats utilisés comme appoint peuvent être traités afin d'éliminer les impuretés qu'ils contiennent avant injection dans le circuit de refroidissement. On peut par exemple les filtrer, les traiter chimiquement (neutralisation, traitement anti tartre, osmose inverse).

Le circuit de refroidissement consiste en une boucle parallèle qui échange de la chaleur avec l'eau réchauffée indirectement. La purge de cette boucle parallèle peut être envoyée dans le système de traitement des condensats pour minimiser les pertes en eau.

Il est possible d'utiliser une partie des condensats acides comme appoint en court-circuitant le système de traitement. Leur pH permet d'augmenter le nombre de cycles de concentration car un pH faible augmente la solubilité du CaCO3. Au lieu d'envoyer tous les condensats 9 générés en aval des moyens de mise en contact T à la station de traitement WWT puis vers le système de refroidissement dédié HX1, P2, CT, on peut envoyer directement une partie 15A des condensats au système car ils sont acides et permettent de limiter les dépôts de tartre. On pourra les injecter à différents endroits (mélange dans une tuyauterie par exemple) mais il est préférable de les envoyer dans le bassin de la tour de refroidissement CT.

Dans le cas où l'appoint est insuffisant, une partie de l'eau destinée à la tour de refroidissement à l'eau peut court-circuiter la tour pour minimiser le débit la traversant et donc l'évaporation. Dans ce cas, l'eau ne sera refroidie que jusqu'à une température intermédiaire.

Ces configurations permettent une minimisation de la température de l'eau utilisée pour refroidir la source chaude tout en minimisant (voire annulant) le besoin d'appoint en eau d'une source extérieure. Les conséquences sont les suivantes :
- débit d'eau circulant pour refroidir la source chaude plus faible (l'eau étant plus froide, moins d'eau est nécessaire) minimisant la taille des équipements sur l'ensemble de la boucle
- minimisation de l'énergie du compresseur en aval du fait de la plus faible température ainsi que sa taille (plus faible débit volumique à traiter)
- condensation accrue de l'eau contenue dans la source chaude minimisant l'énergie du compresseur en aval ainsi que sa taille (plus faible débit massique à traiter)
- condensation accrue de l'eau contenue dans la source chaude minimisant la demande en refroidissement pour les échangeurs intermédiaires du compresseur car moins d'eau y est condensée.

Si on combine dans le circuit de refroidissement au moins un refroidisseur indirect à air en amont ou en aval de l'au moins une tour de refroidissement CT à contact direct avec de l'air, ceci permet de minimiser la température en entrée de l'au moins une tour de refroidissement et donc la chaleur qui y est dépensée permettant de minimiser l'évaporation et donc le besoin d'appoint en eau. Cet appoint est en grande partie généré par le procédé lui-même lors de la compression, refroidissement et/ou séchage de la source chaude.

L'invention sera décrite de manière plus détaillée en se référant à la figure où :

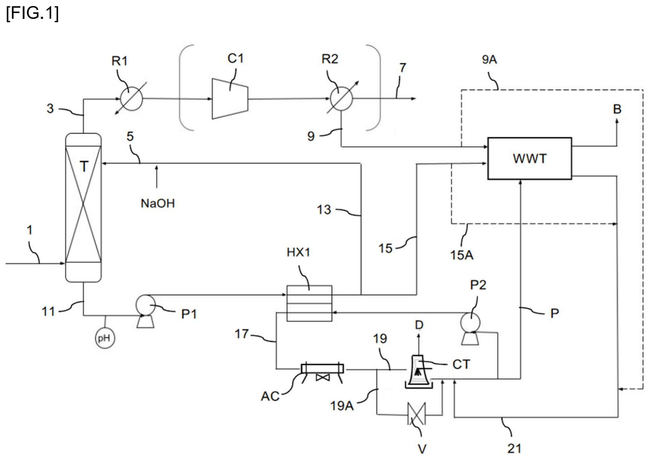

[FIG.1] représente un procédé selon l'invention.

Un débit contenant au moins 15% mol CO2, voire au moins 30% mol CO2 à base sèche, de l'eau, des particules solides et au moins une impureté, telle qu'un SOx et/ou un Nox 1 est envoyé dans une tour de lavage T où il est lavé par un débit d'eau éventuellement contenant de l'hydroxyde de sodium NaOH. De préférence le niveau d'acidité est mesuré en amont de la pompe P1 dans un analyseur pH. Ceci a pour effet d'épurer le débit 1 et de le refroidir. Le débit 3 refroidi et épuré en particules et en SOx et/ou NOx est réchauffé dans un échangeur de chaleur R1 par de l'eau et ensuite est comprimé par au moins une étape de compression C1 suivie d'au moins une étape de refroidissement R2 ; La compression et/ou le refroidissement condense de l'eau restante 9 présent dans le débit 3, cette eau étant acidifiée par la présence de NOx et/ou SOx et de CO2 et étant appelée condensat. Le débit séché 7 est encore séché par adsorption dans une unité de type TSA (non illustré). Après séchage du débit de fluide appauvri en eau par adsorption, la condensation de la vapeur d'eau adsorbée permet l'utilisation de l'eau condensée comme appoint pour le système de refroidissement.

Le condensat 9 est envoyé à une unité de traitement WWT où il est épuré pour éliminer l'au moins un acide qu'il contient ainsi qu'éventuellement les particules solides restants. De la saumure B sort de l'unité WWT et peut être réutilisée ou rejetée dans le milieu naturel. L'unité WWT produit également un débit d'appoint d'eau épuré 21. Un débit d'eau contenant des particules solides et enrichi en SOx et/ou NOx est soutiré en cuve de la tour de lavage T, pressurisé dans une pompe P1 et puis refroidi dans un échangeur de chaleur indirect HX1. L'eau refroidie 13 est envoyée en tête de la tour de lavage T éventuellement après rajout d'hydroxyde de sodium. Une partie 15 de l'eau peut être déviée au moins ponctuellement comme purge et envoyée à l'unité de traitement WWT pour être traitée. Ainsi l'unité de traitement WWT est commune aux condensats 9 et à la tour de lavage T. L'unité de traitement WWT peut être commune aux condensats 9 de la compression du gaz provenant des moyens de mise en contact M, du système de refroidissement et du circuit de renvoi d'eau réchauffée refroidi 13 par le système de refroidissement.

Ainsi on voit que les débits 9, 15 et P sont envoyés à l'unité WWT pour être traités par exemple pour réduire leur acidité. L'échangeur de chaleur HX 1 est refroidi par un circuit de refroidissement semi ouvert avec un appoint d'eau 21 venant de l'unité de traitement WWT et une purge P envoyée également à l'unité WWT. Le refroidissement du circuit est obtenu par une tour de refroidissement d'eau à contact direct à l'air CT éventuellement précédée ou suivi par un refroidisseur à contact direct avec de l'air AC. Comme illustré dans la Figure, l'eau est introduite dans la tour pour couler vers le bas en contre-courant avec de l'air atmosphérique.

Le refroidisseur AC peut être remplacé par un échangeur de chaleur à contact indirect relié à un autre circuit de refroidissement, par exemple un circuit de refroidissement de l'au moins une étape de compression C1 dans un compresseur. L'eau 17 réchauffée dans l'échangeur HX 1 arrive directement à la tour CT ou est refroidie par le refroidisseur AC avant d'arriver à la tour CT ou en aval de la tour CT. L'eau envoyée dans la tour CT échappe en partie diluée en l'air du refroidisseur AC si présent et en partie sous forme d'aérosols en haut de la tour CT comme débit D entraîné par l'air et le reste de l'eau 19 est divisé en deux, une partie P étant envoyée à l'unité de traitement WWT et une autre partie étant mélangée avec le débit d'appoint 21 pour compenser les pertes en vapeur D. L'eau refroidie est recirculée à l'échangeur de chaleur HX 1par une pompe P2.

Une partie 9A du condensat peut être envoyée directement au système de refroidissement CT, HX1, P2 sans passer par l'unité de traitement WWT. Elle est de préférence mélangée au débit d'appoint 21.

Une partie 15A de la purge 15 peut également être envoyée au système de refroidissement sans passer par l'unité de traitement WWT. Elle est de préférence mélangée au débit d'appoint 21.

Une partie 19A de l'eau 12 peut contourner la tour de refroidissement à l'air CT en passant par la vanne ouverte V. De préférence, on régule la quantité d'eau 19A circulant dans le système de refroidissement sans passer par la tour de refroidissement en fonction du débit d'appoint 21.

Dans le cas où l'appoint 21 est insuffisant, une partie de l'eau 19A destinée à la tour de refroidissement à l'eau peut court-circuiter la tour CT pour minimiser le débit 19 la traversant et donc l'évaporation D. Dans ce cas, l'eau ne sera refroidie que jusqu'à une température intermédiaire.

Sinon si le débit du débit l'appoint 21 réduit, le débit 19A augmente.

## Revendications

1. Procédé de refroidissement, compression et refroidissement d'un gaz contenant au moins 15% mol CO2 et de l'eau comprenant les étapes suivantes:
• mise en contact direct (T) du gaz (1) qui se refroidit avec de l'eau (5), à une première température, plus froide que le gaz, qui se réchauffe formant de l'eau réchauffée (11)
• pompage (P1) de l'eau réchauffée
• refroidissement de l'eau réchauffée pompée pour générer l'eau à la première température dans un système de refroidissement, le système de refroidissement comprenant :
∘ un échangeur de chaleur à contact indirect (HX 1) qui échange de la chaleur entre l'eau réchauffée pompée et un débit d'eau de refroidissement (17) du système d'eau de refroidissement et une tour de refroidissement (CT) par contact direct avec de l'air pour refroidir au moins une partie de l'eau de refroidissement en amont de l'échangeur de chaleur, l'eau refroidie dans la tour de refroidissement étant renvoyée à l'échangeur de chaleur
• compression du gaz refroidi par la mise en contact dans un compresseur (C1) pour produire un fluide comprimé contenant du CO2 et de l'eau
• refroidissement (R2) du gaz comprimé et condensation partielle de l'eau qu'il contient formant de l'eau condensée (9) et un débit de gaz appauvri en eau (7) et
• utilisation d'au moins une partie (21) de l'eau condensée comme appoint d'eau pour le système de refroidissement, éventuellement après traitement dans une unité de traitement (WWT) pour épurer l'eau condensée.

2. Procédé selon la revendication 1 comprenant on refroidit le débit d'eau de refroidissement, réchauffé dans l'échangeur de chaleur (HX 1) en amont de la tour de refroidissement à l'air (CT) ou à réchauffer dans l'échangeur de chaleur en aval de la tour de refroidissement, dans un moyen de refroidissement (AC).

3. Procédé selon la revendication 2 dans lequel le moyen de refroidissement est un aéro-refroidisseur (AC) qui refroidit l'eau par contact direct avec de l'air ou un autre échangeur de chaleur à contact indirect qui reçoit des frigories d'un autre circuit de refroidissement, éventuellement qui est un circuit de refroidissement du compresseur.

4. Procédé selon une des revendications précédentes comprenant les étapes de séchage du débit de fluide appauvri en eau (7) par adsorption et condensation de la vapeur d'eau adsorbée.

5. Procédé selon une des revendications précédentes dans lequel au moins une partie de l'au moins une partie (9) de l'eau condensée est traitée (WWT) pour réduire son acidité avant d'être envoyée au système de refroidissement.

6. Procédé selon une des revendications précédentes dans lequel au moins une partie de l'au moins une partie (9A) de l'eau condensée n'est pas traitée avant d'être envoyée au système de refroidissement.

7. Procédé selon les revendications 5 et 6 dans lequel on forme un débit d'appoint d'eau en mélangeant de l'eau traitée dans l'unité de traitement (WWT) et au moins un condensat non traitée dans l'unité de traitement et éventuellement un débit de purge (P) non traité dans l'unité de traitement pour réguler le niveau d'acidité du débit d'appoint

8. Procédé selon une des revendications précédentes dans lequel une partie de l'eau de refroidissement (19A) circule dans le système de refroidissement sans passer par la tour de refroidissement à l'air (CT).

9. Procédé selon la revendication 8 dans lequel on régule la quantité d'eau circulant dans le système de refroidissement sans passer par la tour de refroidissement à l'air (CT) en fonction du débit d'appoint.

10. Appareil de refroidissement, compression et refroidissement d'un gaz contenant au moins 15% mol CO2 et de l'eau comprenant :
• des moyens de mise en contact direct (T) du gaz (1) qui se refroidit avec de l'eau (5), à une première température, plus froide que le gaz, qui se réchauffe formant de l'eau réchauffée
• une pompe (P1) reliée pour pressuriser l'eau réchauffée (11) produisant de l'eau réchauffée pompée
• un système de refroidissement de l'eau réchauffée pour générer l'eau à la première température, le système de refroidissement comprenant :
∘ un échangeur de chaleur (HX 1) à contact indirect qui échange de la chaleur entre l'eau réchauffée pompée et un débit d'eau de refroidissement (17) du système d'eau de refroidissement et une tour de refroidissement (CT) par contact direct avec de l'air pour refroidir au moins une partie de l'eau de refroidissement en amont de l'échangeur de chaleur, la tour étant reliée à l'échangeur de chaleur pour y renvoyer de l'eau refroidie dans la tour
• des moyens de compression (C1) du gaz (5) refroidi dans les moyens de mise en contact (T) pour produire un fluide comprimé contenant du CO2 et de l'eau
• un refroidisseur (R1) pour refroidir et condenser partiellement un gaz comprimé par les moyens de compression et un séparateur de phase pour séparer le gaz condensé partiellement formant de l'eau condensée et un débit de gaz appauvri en eau et
• une conduite reliée au séparateur de phases pour envoyer au moins une partie de l'eau condensée (9, 21) comme appoint d'eau pour le système de refroidissement, éventuellement reliée à une unité de traitement (WWT) pour épurer l'eau.
